# EUROPEAN PATENT APPLICATION

(11) **EP 1 345 219 A2**
(43) Date of publication of application: **17.09.2003**
(21) Application number: 03251453.1
(22) Date of filing: 11.03.2003
(51) Int. Cl.: G11B 7/26

(54) **Method and apparatus for producing optical disk master**

(30) Priority: 15.03.2002 JP 2002071864
(71) Applicant: Matsushita Electric Industrial Co., Ltd., Kadoma-shi, Osaka 571-8501 (JP)
(72) Inventor: Abe, Shinya, Osaka 571-0059 (JP); Sato, Shuji, Nara 631-0036 (JP)
(74) Representative: Jeffrey, Philip Michael

(57) **Abstract**

A modulated or deflected recording light for forming a signal area on a disk substrate for creating a master is generated, and the rotating disk substrate coated with a photosensitive material is irradiated with the recording light for exposure while the recording light is being moved in a radial direction of the disk substrate. During the irradiation of the recording light, the rotational speed of the disk substrate and the movement speed of the recording light are controlled in such a manner that they have a predetermined relationship in accordance with the pitch of tracks in the signal area. The recording light is modulated or deflected continuously in accordance with the signals for irradiation on the disk substrate, using signals corresponding to a plurality of signal areas with different track pitches. When switching the signal area, the track pitch is changed by changing the relationship between the rotational speed of the disk substrate and the movement speed of the recording light, based on the track pitch in the next signal area.

## Description

The present invention relates to a method for producing a master for manufacturing an optical recording medium such as an optical disk, in particular, to a method suitable for producing an optical disk master having a plurality of signal areas with different track pitches, and an apparatus for producing the same.

In an optical disk, information is recorded in an area provided with spiral tracks, or the recorded information is reproduced by an optical head. Conventionally, in a recording area with one continuous track in an optical disk, a pitch (track pitch) of the formed track was constant. For example, in a DVD-RAM optical disk, the track pitch in a read-only area in which control data are recorded is different from that in a recording/reproduction area in/from which information is recorded/reproduced. However, the tracks are discontinuous between these two areas. Therefore, when forming each area in an optical disk master used for manufacturing an optical disk, each area can be recorded separately. Thus, even if the track pitch is different from area to area, this case can be dealt with by changing the setting of the track pitch in a static state immediately before recording each of the areas.

In recent years, in order to record or reproduce information at the boundaries between these plurality of areas continuously and smoothly, the inventors of the present invention have researched into joining tracks between a plurality of areas to form a continuous track. In this case, for recording in a master, it is necessary not to stop exposure on a master but continue exposure for recording at the time of switching the areas, while changing the track pitch in accordance with the progress of recording of the individual areas.

Furthermore, it is necessary to change the track pitch within a predetermined range between the areas and in synchronization with a signal for forming a track in each area.

It is an object of the present invention to provide a method and an apparatus for producing an optical disk master that make it possible to form a track continuously with respect to a plurality of signal areas with different track pitches and to change the track pitch in synchronization with a signal for forming a track in each of the areas.

A method for producing an optical disk master of the present invention includes the steps of generating a recording light that is modulated or deflected in accordance with a signal for forming a predetermined signal area on a disk substrate for creating the optical disk master; performing exposure for forming the signal area by irradiating the disk substrate that is rotating and coated with a photosensitive material with the recording light while moving the recording light in a radial direction of the disk substrate; and controlling a rotational speed of the disk substrate and a movement speed of the recording light during the irradiation of the recording light for exposure such that the rotational speed and the movement speed have a predetermined relationship in accordance with a pitch of a track formed in the signal area.

Furthermore, signals corresponding to a plurality of signal areas with different track pitches are used as the signal for forming the predetermined signal areas. The recording light is modulated or deflected continuously in accordance with the signals corresponding to the plurality of signal areas for irradiation on the disk substrate. When switching the signal area of one type to another type of signal area to be formed, the track pitch is changed by changing the relationship between the rotational speed of the disk substrate and the movement speed of the recording light, based on the track pitch in the signal area to be formed.

An apparatus for producing an optical disk master of the present invention includes a signal generating portion for supplying a modulation or deflection signal in accordance with signals for forming a plurality of signal areas with different track pitches; a laser beam source for generating a recording light that is modulated or deflected based on the signal supplied from the signal generating portion; a turntable for rotating a disk substrate; a recording light guiding portion for guiding the recording light generated by the laser beam source to the disk substrate for exposure so as to form a track while moving in the radial direction of the turntable; and a controlling portion for controlling the rotational speed of the turntable and the speed of the movement of the recording light guiding portion in accordance with the signal supplied by the signal generating portion. The signal generating portion supplies the modulation or deflection signal corresponding to the plurality of signal areas with different track pitches to the laser beam source continuously across the plurality of signal areas. When switching the signal area of one type to another type of signal area to be formed, the controlling portion changes the track pitch by changing the relationship between the movement speed of the recording light guiding portion and the rotational speed of the turntable based on the track pitch in the signal area to be formed going forward.

In a method for producing an optical disk master of the present invention, a rotating disk substrate for creating the optical disk master is irradiated with a recording light such as a laser beam for exposure so as to form a predetermined signal area. The recording light is modulated or deflected for irradiation while being moved in the radial direction of the disk substrate in order to form a predetermined signal area. During the irradiation of the recording light, the rotational speed of the disk substrate and the movement speed of the recording light are controlled in accordance with the pitch of the track in each of the signal areas.

The present invention can be applied, in particular, to form a plurality of signal areas with different track pitches on the disk substrate. The present invention is characterized by continuously forming tracks with different pitches at the boundary of the different signal areas. For this purpose, signals corresponding to the plurality of signal areas with different track pitches are used as the signals for forming the predetermined signal areas and the recording light is modulated or deflected continuously in response to the signals and irradiated continuously on the disk substrate. When switching one type of signal area to another type of signal area to be formed, the relationship between the rotational speed of the disk substrate and the movement speed of the recording light is changed based on the track pitch of the signal area to be formed going forward.

According to this method for producing an optical disk master, a continuous track can be formed easily with respect to a plurality of signal areas with different track pitches.

In the above-described method, it is preferable that a switching signal indicating that the track pitch is to be switched is generated based on the signals corresponding to the plurality of signal areas, and the relationship between the rotational speed of the disk substrate and the movement speed of the recording light is changed in response to the switching signal.

Furthermore, it is preferable that when switching the signal areas, the intensity of the recording light also is switched in accordance with the respective signal areas.

The intensity of the recording light may be switched in accordance with the respective signal areas, in response to the switching signal.

Furthermore, the preset values of the plurality of track pitches corresponding to the respective signal areas may be stored in a storage beforehand. The preset value of the track pitch corresponding to the signal area may be selected from the preset values in response to the switching signal, and the relationship between the rotational speed of the disk substrate and the movement speed of the recording light may be changed based on the selected preset value.

Alternatively, the preset values of the plurality of intensities of the recording light corresponding to the respective signal areas may be stored in a storage beforehand. The preset value of the intensity of the recording light corresponding to the signal area may be selected from the preset values in response to the switching signal, and the intensity of the recording light may be switched based on the selected preset value.

In the above-described apparatus for producing an optical disk master, it is preferable that the apparatus further includes a switching signal generating portion for generating a switching signal indicating that the track pitch is to be switched, based on the signal for forming the plurality of signal areas and supplying the switching signal to the controlling portion. The controlling portion changes the track pitch by changing the relationship between the movement speed of the recording light guiding portion and the rotational speed of the turntable in response to the switching signal.

The controlling portion may have a track pitch table storing the preset values of the plurality of track pitches, selects a preset value of the track pitch from the table in response to the switching signal, and controls the relationship between the movement speed of the recording light guiding portion and the rotational speed of the turntable based on the preset value.

The controlling portion may have a recording intensity table storing the preset values of a plurality of recording intensities, selects a preset value of the recording intensity from the recording intensity table in response to the switching signal from the signal generating portion, and controls the recording intensity based on the preset value.

A method for manufacturing an optical disk according to the present invention includes producing an optical disk master by any of the above -described method for producing an optical disk master, and manufacturing an optical disk by using the optical disk master.

An optical disk master of the present invention includes a disk substrate and a plurality of signal areas provided on a surface of the disk substrate so as to form a plurality of tracks in the form of convexities and concavities in a radial direction. The tracks are continuous across the plurality of different signal areas, and there is at least one portion in which the pitches of the tracks in the adjacent signal areas are different from each other.

In this optical disk master, there may be at least two portions in which the pitches of the tracks in the adjacent signal areas are different from each other. Also the pitches of the tracks may vary continuously at a location between the adjacent signal areas with different pitches of the tracks.

Hereinafter, a method and an apparatus for producing an optical disk master in an embodiment of the present invention will be described with reference to the accompanying drawings.

FIG. 1 is a schematic plan view showing an optical disk that is manufactured by using an optical disk master produced by a method for producing an optical disk master in an embodiment of the present invention.

FIGS. 2A through 2E are cross-sectional views showing the steps of the method for producing an optical disk master in the embodiment of the present invention.

FIG. 3 is a schematic block diagram showing a recording device for the optical disk master in the embodiment of the present invention.

FIG. 4 is a schematic plan view for illustrating the tracks of the optical disk master that is produced according to the embodiment of the present invention.

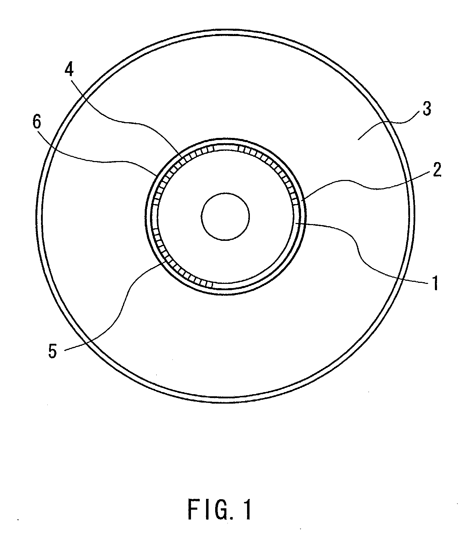

First, the outline of an optical disk to be manufactured by using the master produced by the method of this embodiment will be described with reference to FIG. 1 as one example.

This optical disk has, for example, a diameter of 120 mm, an inner diameter of 15 mm and a thickness of 1.2 mm. Information can be recorded and reproduced on this optical disk by using an optical head having a wavelength of 405 nm and a numerical aperture of 0.85 via a transparent layer having a thickness of 0.1 mm. As signal areas in which the information is recorded on the optical disk, a BCA area 1, a read-only area 2 and a recording/reproduction area 3 are disposed in this order from the inner circumference, as shown in FIG. 1.

The BCA area 1 is located in a range of 21 mm to 22 mm from the center in the radial direction, and a bar code-like mark referred to as a BCA (burst cutting area) is recorded therein. The read-only area 2 is located in a range of 22.4 mm to 23.2 mm from the center in the radial direction, and is a read-only area in which disk information is recorded. The recording/reproduction area 3 is located in a range of 23.2 mm to 58.6 mm from the center in the radial direction, and is an area in and from which information is recorded and reproduced. However, the radial values of the positions of these areas are only examples and these areas can be located at other radial positions.

Each of the areas is provided with pre-grooves (not shown) and the track pitch in the BCA area 1 is 2.0 mm, 0.35 mm in the read-only area 2, and 0.32 mm in the recording/reproduction area 3.

In the currently used DVD, the track pitch is set at 0.74 mm for the optical head having a wavelength of 650 nm and a numerical aperture of 0.60, and therefore for the above described head, it is preferable to set the track pitch at approximately 0.4 mm or less, in view of its wavelength and numerical aperture.

The BCA area 1, the read-only area 2 and the recording/reproduction area 3 are provided with a phase-change recording layer. The bar code-like BCA 4 in the BCA area 1 can be composed by arranging two types of areas of the crystal state and the amorphous state of the phase-change recording layer in the form of bar codes. In the read-only area 2, read-only data are recorded, for example, in the form of pre-grooves wobbled in accordance with signals to be recorded as the form of expressing the data. Furthermore, in the read-only area 2, pre-pits modulated in accordance with reproduction signals also can be used instead of the pre-grooves. Furthermore, the read-only area 2 is not limited to the area exclusively used for reproduction and also can include an area for write-once or recording/reproduction. In the recording/reproduction area 3, address data are recorded by wobbling the pre-grooves to express address information. Information can be recorded in the recording/reproduction area 3 by using not only the pre-grooves but also pre-pits.

A first guard area 5 at which the track pitch is switched is provided between the BCA area 1 and the read-only area 2. Similarly, a second guard area 6 at which the track pitch is switched is provided between the read-only area 2 and the recording/reproduction area 3.

In the first guard area 5, the track is continuous and the track pitch is changed gradually from 2.0 mm for the BCA area 1 to 0.35 mm for the read-only area 2. Also in the second guard area 6, the track is continuous and the track pitch is changed gradually from 0.35 mm for the read-only area 2 to 0.32 mm for the recording/reproduction area 3.

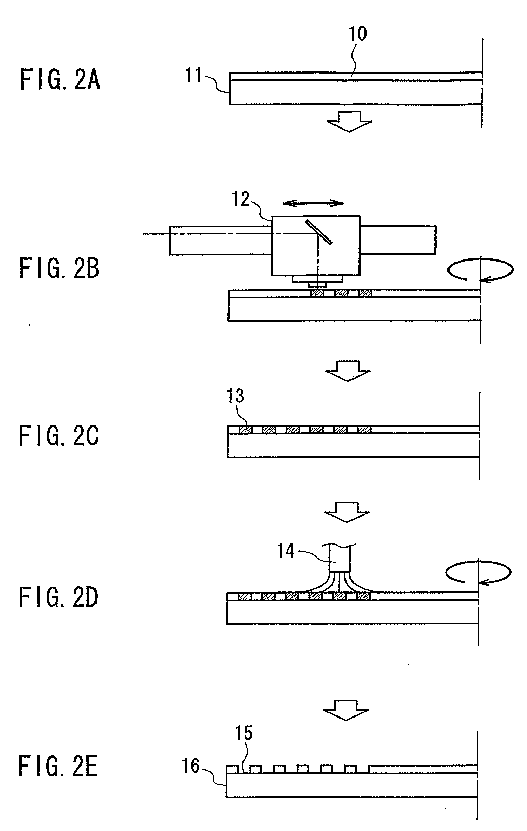

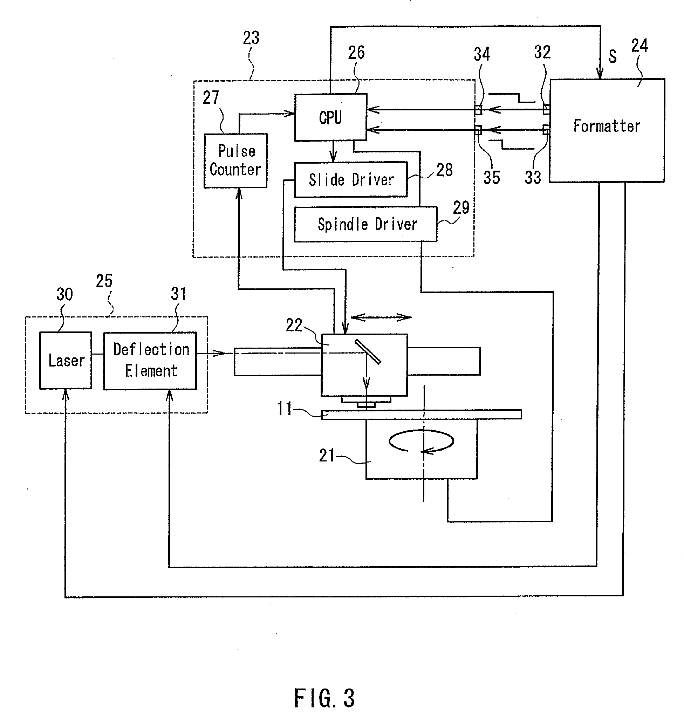

Next, the method and the apparatus for producing an optical disk master in an embodiment of the present invention will be described with reference to FIGS. 2A through 2E and FIG. 3.

As shown in FIG. 2A, a glass substrate 11 that is uniformly coated with a positive photoresist 10 as a photosensitive material is prepared. Then, as shown in FIG. 2B, a pre-groove pattern is exposed using signals from a formatter for generating signals in accordance with a desired pre-groove pattern, with a laser beam recorder (hereinafter referred to as "LBR") 12 employing a far-ultraviolet laser (wavelength of 248 nm). Exposure for recording is performed with the LBR 12 and the exposure is stopped when it reaches the outer circumferential radius of the recording/reproduction area 3 shown in FIG. 1. Thus, a latent image 13 of the desired groove pattern is recorded on the glass substrate 11 as shown in FIG. 2C. Then, as shown in FIG. 2D, development is performed with a developing solution ejected from a developing nozzle 14 while rotating the glass substrate 11, and then the glass substrate 11 is dried. Thus, a disk master 16 on which the desired groove pattern 15 is formed is produced as shown in FIG. 2E.

Hereinafter, the configuration of the LBR 12 used in the step of FIG. 2B will be described with reference to FIG. 3. The LBR includes a spindle 21 for supporting and rotating the glass substrate 11, a slide 22 driven by a linear motor and moving in the radial direction, a control circuit 23 for controlling them, a formatter 24 for generating signals to be recorded, and a laser beam source 25.

The control circuit 23 includes a CPU 26, a pulse counter 27, a slide driver 28 and a spindle driver 29. The CPU 26 controls the movement of the slide 22 via the slide driver 28 and controls the rotation of the spindle 21 via the spindle driver 29. The laser beam source 25 includes a laser 30 and a deflection element 31. The laser 30 generates a modulated laser beam and the deflection element 31 deflects the laser beam generated by the laser 30 in accordance with the signals supplied from the formatter 24. The glass substrate 11 is irradiated with laser beam output from the laser beam source 25 via the slide 22.

An encoder (not shown) for detecting the amount of the movement in the radial direction is mounted on the slide 22. The encoder generates pulses at intervals of a predetermined distance along with the movement of the slide 22 in the radial direction, and the pulse outputs are counted by the pulse counter 27 in the control circuit 23. An output of the pulse counter 27 is input to the CPU 26. In the CPU 26, the interval at which a pulse is generated in the encoder is stored beforehand. In the CPU 26, the amount of the movement of the slide 22 in the radial direction can be detected based on the data on the stored interval at which a pulse is generated and the number of the pulses counted by the pulse counter 27. Thus the movement speed of the slide 22 can be detected.

The movement speed of the slide 22 relative to the rotational speed of the spindle 21 is determined by the preset value of the track pitch. Therefore, the CPU 26 operates such that the movement speed of the slide 22 becomes a predetermined value. In reality, the CPU 26 controls the driving of the slide 22 in such a manner that the count value of the pulse counter 27 becomes an appropriate value corresponding to the preset value of the track pitch relative to the rotational speed of the spindle 21.

The formatter 24 supplies modulation signals and deflection signals constituting signals in accordance with the stored pre-groove pattern to the laser 30 and the deflection element 31, respectively. The supply of those signals is started in response to a start signal S supplied from the CPU 26 in the control circuit 23 at the start of exposure with the laser beam. The signals in accordance with the pre-groove pattern are different from one another, corresponding to each of the areas to be formed on the optical disk master. The formatter 24 also outputs identifying signals that are different by each area based on the signals that are different by each area, from a first output terminal 32 and a second output terminal 33. The first and second output terminals 32 and 33 are connected to first and second input terminals 34 and 35 of the control circuit 23, respectively.

For example, when an exposed position by the laser beam reaches the first guard area 5 shown in FIG. 1, the identifying signal output from the first output terminal 32 is turned from a low level to a high level to indicate that the timing for switching the track pitch has come. When the exposed position enters the second guard area 6, the identifying signal output from the second output terminal 33 is turned from the low level to the high level to indicate that the timing for switching the track pitch has come. In each case, when the identifying signal is turned to the high level, the high level is maintained until recording for the area is completed.

The control circuit 23 determines whether the level of the input signal at each of the first input terminal 34 and the second input terminal 35 is the high level or the low level, and identifies a 2-bit signal, taking the high level as "1" and the low level as "0". When the input signals to the input terminals 34 and 35 are referred to as a first input signal and a second input signal, respectively, the control circuit 23 has a table for setting four types of track pitches and four types of recording intensities corresponding to the respective input signal values, as shown in Table 1.

**Table 1**

| Input signal | | Track pitch (µm) | Recording power (mW) |
|---|---|---|---|
| First input signal | Second input signal | | |
| 0 | 0 | 2.0 | 0.6 |
| 1 | 0 | 0.35 | 0.5 |
| 0 | 1 | 0.33 | 0.4 |
| 1 | 1 | 0.32 | 0.35 |

The number of the pulses to be detected by the pulse counter 27 of the control circuit 23 is switched in accordance with the input signal values so as to achieve the selected track pitch, and thus the track pitch is switched.

For exposure, at first, the formatter 24 outputs signals (00b) of low level from both the first output terminal 32 and the second output terminal 33. The slide 22 starts moving from a predetermined position as appropriate on the glass substrate 11 and exposure is started. In accordance with the movement of the slide 22, grooves are started to be exposed for recording at a track pitch of 2.0 mm, which is the preset value corresponding to (00b) in Table 1 from a position corresponding to the inner circumference radius of the BCA area 1 or inside the BCA area 1.

When the signals in accordance with the pre-groove pattern that are output from the formatter 24 become signals corresponding to the first guard area 5, the first output terminal 32 is turned from 0 to 1, and the first input terminal 34 of the control circuit 23 correspondingly is turned from 0 to 1. Therefore, the preset value of the track pitch in the control circuit 23 is switched to 0.35 mm, which is the track pitch corresponding to (10b), and at the same time, exposure of the track is changed such that a track pitch of 0.35 mm, which is the track pitch for the read-only area 2, is achieved. In this manner, the track pitch is changed without disconnecting the track in the first guard area 5, and the following exposure of the track in the read-only area 2 is performed uniformly at the second track pitch.

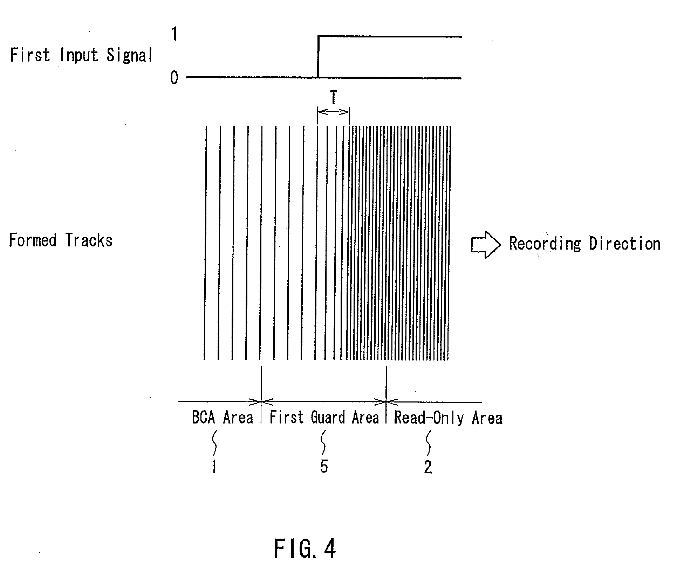

FIG. 4 is a schematic view showing the track formed continuously by shifting the track pitch gradually in the first guard area 5. FIG. 4 shows that the track pitch is changed from 2.0 mm to 0.35 mm continuously without disconnecting the track in a transition section T including a plurality of tracks from the point where the first input terminal 34 of the control circuit 23 is turned from 0 to 1 in the first guard area 5.

Similarly, in the second guard area 6, the formatter 24 turns the second output terminal 33 from 0 to 1. Thus, the second input terminal 35 of the control circuit 23 also is turned from 0 to 1, and a track pitch of 0.32 mm, which corresponds to (11b), is selected and the exposure of the track is switched such that 0.32 mm, which is the track pitch for the recording/reproduction area 3, is achieved. In this manner, also in the second guard area 6, the track pitch is changed without disconnecting the track. The following exposure of the track in the recording/reproduction area 3 is performed uniformly at a track pitch of 0.32 mm.

The number of the tracks included in the transition section T in which the track pitch is shifted gradually shown in FIG. 4 can be adjusted by setting the response speed of feedback control by the control circuit 23 relative to the movement speed of the slide 22. The number of the tracks included in the transition section T can be set as appropriate in accordance with various conditions. However, as the number of the tracks in the transition section T increases, the number of the tracks that cannot be used for recording signals increases and thus the recording intensity decreases, so that the upper limit preferably is set at 130. Although there is no theoretical problem even if the lower limit is 0, this is not practical because it would impose a burden on the control by the control circuit 23. Accordingly, the lower limit preferably is set at 2 tracks.

Furthermore, it is preferable that the position where the track pitch is switched is set such that the transition section T is positioned in the central portion of the area in the radial direction corresponding to the guard area on the optical disk, as shown in FIG. 4.

Furthermore, the LBR 12 can be provided not only with the function of switching the track pitch but also with the function of switching the preset value of the recording intensity as shown in Table 1. Therefore, by setting the optimum recording intensity for the recording of each area, the track pitch and the recording intensity can be switched simultaneously in synchronization with a signal of the formatter 24 within the first guard area 5 and the second guard area 6. Thus, a groove with an appropriate width can be formed in each area and the performance of the produced optical disk can be improved.

Furthermore, it is unnecessary that the track pitches in all the plurality of areas be different from one another. The present invention can be applied to the case where the track pitches of the adjacent areas are different from each other only in some of the areas. In such a case, for example, it also is possible to switch only the recording intensity using a switching signal as described above in a portion where the track pitch is to be unchanged between adjacent areas and only the width of a desired groove is to be changed. The present invention is particularly effective in the case where the track pitches of the adjacent areas are different from each other in at least two portions.

Furthermore, the timing at which the track pitch is switched can be adjusted without changing the formatter 24 by providing delay circuits between the first output terminal 32 and the first input terminal 34 and between the second output terminal 33 and the second input terminal 35. Furthermore, the timing at which the track pitch is switched also can be adjusted by incorporating a delay circuit in the formatter 24 or the control circuit 23.

In the above embodiment, an example in which the track pitch is switched twice for recording in a master has been described. However, it may be necessary to switch the track pitch more than twice in some cases, depending on the format of the optical disk. In this case, the number of the switching signals between the control circuit 23 and the formatter 24 is increased, and the number of the types of the preset values of the track pitch and the recording intensity in the table included in the control circuit 23 is increased, so that the same advantages as described above can be obtained.

The invention may be embodied in other forms without departing from the spirit or essential characteristics thereof. The embodiment disclosed in this application is to be considered in all respects as illustrative and not limiting. The scope of the invention is indicated by the appended claims rather than by the foregoing description, and all changes which come within the meaning and range of equivalency of the claims are intended to be embraced therein.

## Claims

1. A method for producing an optical disk master comprising the steps of generating a recording light that is modulated or deflected in accordance with a signal for forming a predetermined signal area on a disk substrate for creating the optical disk master; performing exposure for forming the signal area by irradiating the disk substrate that is rotating and is coated with a photosensitive material with the recording light while moving the recording light in a radial direction of the disk substrate; and controlling a rotational speed of the disk substrate and a movement speed of the recording light during the irradiation of the recording light for exposure such that the rotational speed and the movement speed have a predetermined relationship in accordance with a pitch of a track formed in the signal area,
wherein signals corresponding to a plurality of signal areas with different track pitches are used as the signal for forming the predetermined signal areas,
the recording light is modulated or deflected continuously in accordance with the signals corresponding to the plurality of signal areas for irradiation on the disk substrate, and
when switching the signal area of one type to another type of signal area to be formed, the track pitch is changed by changing the relationship between the rotational speed of the disk substrate and the movement speed of the recording light, based on the track pitch in the signal area to be formed.

2. The method for producing an optical disk master according to claim 1, wherein a switching signal indicating that the track pitch is to be switched is generated based on the signals corresponding to the plurality of signal areas, and the relationship between the rotational speed of the disk substrate and the movement speed of the recording light is changed in response to the switching signal.

3. The method for producing an optical disk master according to claim 1, wherein when switching the signal areas, an intensity of the recording light also is switched in accordance with the respective signal areas.

4. The method for producing an optical disk master according to claim 2, wherein an intensity of the recording light also is switched in accordance with the respective signal areas in response to the switching signal.

5. The method for producing an optical disk master according to claim 2, wherein preset values of the plurality of track pitch corresponding to the signal areas are stored in a storage beforehand, a preset value of the track pitch corresponding to the signal area is selected from the preset values in response to the switching signal, and the relationship between the rotational speed of the disk substrate and the movement speed of the recording light is changed based on the selected preset value.

6. The method for producing an optical disk master according to claim 4, wherein preset values of a plurality of intensities of the recording light corresponding to the signal areas are stored in a storage beforehand, a preset value of the intensity of the recording light corresponding to the signal area is selected from the preset values in response to the switching signal, and the intensity of the recording light is switched based on the selected preset value.

7. An apparatus for producing an optical disk master, comprising a signal generating portion for supplying a modulation or deflection signal in accordance with a signal for forming a plurality of signal areas with different track pitches; a laser beam source for generating a recording light that is modulated or deflected based on the signal supplied from the signal generating portion; a turntable for rotating a disk substrate a recording light guiding portion for guiding the recording light generated by the laser beam source to the disk substrate for exposure so as to form a track while moving in a radial direction of the turntable; and a controlling portion for controlling a rotational speed of the turntable and a speed of the movement of the recording light guiding portion in accordance with the signal supplied by the signal generating portion, wherein
the signal generating portion supplies the modulation or deflection signal corresponding to the plurality of signal areas with different track pitches continuously across the plurality of signal areas, and
when switching the signal area of one type to another type of a signal area to be formed, the controlling portion changes the track pitch by changing the relationship between the movement speed of the recording light guiding portion and the rotational speed of the turntable based on the track pitch in the signal area to be formed.

8. The apparatus for producing an optical disk master according to claim 7, further comprising a switching signal generating portion for generating a switching signal indicating that the track pitch is to be switched, based on the signal for forming the plurality of signal areas and supplying the switching signal to the controlling portion, wherein
the controlling portion changes the track pitch by changing the relationship between the movement speed of the recording light guiding portion and the rotational speed of the turntable in response to the switching signal.

9. The apparatus for producing an optical disk master according to claim 8,
wherein the controlling portion has a track pitch table storing a plurality of preset values of the track pitch, selects a preset value of the track pitch from the table in response to the switching signal, and controls the relationship between the movement speed of the recording portion and the rotational speed of the turntable based on the preset value.

10. The apparatus for producing an optical disk master according to claim 8, wherein the controlling portion has a recording intensity table storing a plurality of preset values of the recording intensity, selects a preset value of the recording intensity from the recording intensity table in response to the switching signal from the signal generating portion, and controls the recording intensity based on the preset value.

11. A method for manufacturing an optical disk comprising producing an optical disk master by the method for producing an optical disk master according to claim 1, and manufacturing an optical disk by using the optical disk master.

12. An optical disk master comprising a disk substrate and a plurality of signal areas provided on a surface of the disk substrate so as to form a plurality of tracks in a form of convexities and concavities in a radial direction,
wherein the tracks are continuous across the plurality of different signal areas, and there is at least one portion in which the pitches of the tracks in the adjacent signal areas are different from each other.

13. The optical disk master according to claim 12, wherein there are at least two portions in which the pitches of the tracks in the adjacent signal areas are different from each other.

14. The optical disk master according to claim 12, wherein the pitches of the tracks varies continuously at a location between the adjacent signal areas with different pitches of the tracks.
